# EUROPEAN PATENT APPLICATION

(11) **EP 1 098 239 A1**
(43) Date of publication of application: **09.05.2001**
(21) Application number: 00123716.3
(22) Date of filing: 31.10.2000
(51) Int. Cl.: G06F 1/32

(54) **Microcontroller having core logic power shutdown while maintaining input-output port integrity**

(30) Priority: 02.11.1999 US 432908
(71) Applicant: MICROCHIP TECHNOLOGY INC., Chandler, AZ 85224-6199 (US)
(72) Inventor: Hofhine, Paul, Mesa, Arizona 85213 (US); Bingham, Gregory C., Gilbert, Arizona 85233 (US); Smit, Willem, Chandler, Arizona 85248 (US)
(74) Representative: Patry, Didier Marcel Pierre

(57) **Abstract**

An electronic system using an integrated circuit comprising microcontroller core logic, input-output (I/O) port logic and interface logic, wherein the microcontroller core logic may be powered down (power removed therefrom) while the I/O port logic remains in the state it was in just before the microcontroller core logic was powered down. The I/O port logic remains connected to the power source at all times so that its operation and signal output states are maintained even when the microcontroller core logic is powered down. The major power consuming portion of the integrated circuit electronic system is disconnected from the power source such as a battery, thus greatly conserving battery power and extending the useful battery operating time of the integrated circuit electronic system.

## Description

### Field of the Invention

This invention relates generally to an integrated circuit microcontroller, and more particularly to conserving power in the integrated circuit microcontroller while maintaining output port logic levels. Background of the Related Technology

Digital electronics has become an integral part of all types of products purchased by the consumer, business and industry. These products may comprise alarm systems, remote monitoring and control systems, portable electronic devices such as computers, cellular telephones, personal digital assistants (PDA), portable global positioning satellite (GPS) terminals, and the like. Much of these electronic products operate from battery power. It is desirable and at times imperative that battery power be conserved.

United States Patent No. 5,481,222, by Utz, discloses a power conserving integrated circuit that is coupled to an external power supply only when an external event occurs. A switch internal to the integrated circuit connects the circuitry therein to the power supply for a predetermined time sufficient for a function to be executed by the integrated circuit. Afterwards, the power supply is disconnected from the integrated circuit until another external event occurs. Thus, power is connected to the integrated circuit only when necessary, thereby conserving the amount of power consumed from the external power source.

United States Patent No. 5,787,297, by Lin, discloses a microelectronic device made up of two or more functional units, all disposed on a single integrated circuit die. These functional units need not operate at the same time, therefore, some of the unneeded functional units may be disabled or turned off using one of three techniques: 1) turning off clock inputs, 2) interrupting the supply of power, or 3) deactivating input signals to the unneeded units. The preferred embodiment of the Lin invention inhibits signal inputs to complementary metal oxide semiconductor (CMOS) circuits, thereby minimizing power consumption by putting the CMOS circuits into a static (unchanging) mode.

United States Patent No. 5,182,810, by Bartling et al., discloses a power-management integrated circuit in combination with a microprocessor integrated circuit and other integrated circuits, wherein transmission gates isolate the signal paths between two integrated circuits if one of them is turned off. These avoids the problems of power leakage, substrate pumping, etc. The integrated circuits so connected together can be independently powered up or powered down without affecting operation of the other. Power may be applied to the microprocessor integrated circuit upon the occurrence of an input event.

United States Patent No. 5,634,131, by Matter et al., discloses powering down a functional unit in an integrated circuit having multiple functional units. Each functional unit has its own clock input and the clock associated with that functional unit is stopped when the functional unit not needed, thus conserving power.

Various power reduction and shutdown means have been utilized in integrated circuit systems for extending the useful time of, for example, a battery power source. Generally, the shutdown power consuming integrated circuits "wake up" in response to an input stimuli. However, it is also important to maintain output control and/or status states while conserving power in an integrated circuit microcontroller.

Therefore, what is needed is a system, method and apparatus for maintaining control and/or status states while conserving power in an integrated circuit microcontroller.

### SUMMARY OF THE INVENTION

The invention overcomes the above-identified problems as well as other shortcomings and deficiencies of existing technologies by providing in a microcontroller based integrated circuit, power shutdown of the microcontroller core logic while maintaining control and/or status of the integrated circuit input-output circuits.

In accordance with an embodiment of the present invention, an integrated circuit comprises microcontroller core logic, input-output (I/O) port logic and interface logic, wherein the microcontroller core logic may be powered down (power removed therefrom) while the I/O port logic remains in the state it was in just before the microcontroller core logic was powered down. A power switch such as a metal oxide semiconductor field effect transistor (MOSFET) may be connected between the microcontroller core logic and power source. The I/O port logic remains connected to the power source at all times so that its operation and signal output states are maintained even when the microcontroller core logic is powered down. Selected portions of the interface logic may also remain powered at all times. The interface and/or I/O port logic may include latches or storage registers to retain the last logic state of signals received from the microcontroller core logic before being powered down. Isolation gates may be used to prevent false triggering of clock circuits, erroneous signal information and the like to the interface and/or I/O port logic.

In another embodiment of the invention, the power input node(s) of the microcontroller core logic is connected to ground so that all output signal nodes thereof are at a defined logic level (logic low i.e., at ground potential). The interface and I/O port logic may use storage registers or latches having positive edge triggered clock inputs such that no data transfers occur when the clock inputs are at a logic low. During power down of the microcontroller core logic, the output signal nodes are pulled to a well defined logic low. During application of power to the microcontroller core logic, the clock inputs of the interface and I/O port logic may be disabled until a clock unlock signal is received from the microcontroller core logic. A clock input disable signal may also be used to disable the clock inputs of the interface and I/O port logic just before powering down the microcontroller core logic.

In the embodiments of the invention, the I/O port logic may control the power on/off switch(es). The interface and/or I/O port logic may receive a disable signal from the microcontroller core logic, just before being powered down, so that the clock input nodes of the interface and/or I/O port logic (registers or latches) are disabled (inhibited from accepting a clock signal). Disabling the clock input nodes thus blocks any further changes to the contents of the registers or latches storing data from the microcontroller core logic. The clock input nodes remain disabled until an enable signal, for example but not limitation, from the microcontroller core logic is received by the interface and/or I/O port logic after the microcontroller core logic has been powered back up again. Powering up of the microcontroller core logic may comprise self testing and diagnostic routines, initialization routines and the like. The microcontroller core logic may initiate a power down sequence and the interface and/or I/O port logic may initiate a power up sequence by causing power to be applied to the microcontroller core logic. Once power is applied (re-applied) to the microcontroller core logic, the microcontroller program may instigate a clock enable signal(s) so that normal functionality between the microprocessor core logic, and the interface and I/O port logic is established (re-established).

A feature of the present invention is that power is removed from the high power consumption microcontroller core logic.

Another feature of the present invention is that I/O port logic remains active and retains the most recent information sent thereto by the microcontroller core logic.

An advantage of the present invention is increased function time for a given battery charge in battery powered applications.

Another advantage is reduced heat dissipation due to a reduction in the amount of power consumed by the embodiments of the invention.

Still another advantage is continuous control and/or status indication in a low power consumption mode.

Features and advantages of the invention will be apparent from the following description of presently preferred embodiments, given for the purpose of disclosure and taken in conjunction with the accompanying drawings.

### BRIEF DESCRIPTION OF THE DRAWINGS

Figure 1 is schematic block diagrams of an electronic system according to an embodiment of the invention;
Figure 2 is a schematic logic flow diagram of a power down sequence according to an embodiment of the invention; and
Figure 3 is a schematic logic flow diagram of a power up sequence according to the embodiment of the invention.

### DETAILED DESCRIPTION OF THE PREFERRED EMBODIMENT

The invention is a power saving system, method and apparatus in an integrated circuit comprising microcontroller core logic, input-output (I/O) port logic and interface logic, and power control circuits wherein the microcontroller core logic may be powered down (power removed therefrom) while the I/O port logic remains in the state it was in just before the microcontroller core logic was powered down. The I/O port logic remains connected to the power source at all times so that its operation and signal output states are maintained even when the microcontroller core logic is powered down.

Referring now to the drawings, the details of preferred embodiments of the invention are schematically illustrated. Elements in the drawings that are the same will be represented by the same numbers, and similar elements will be represented by the same numbers with a different lower case letter suffix.

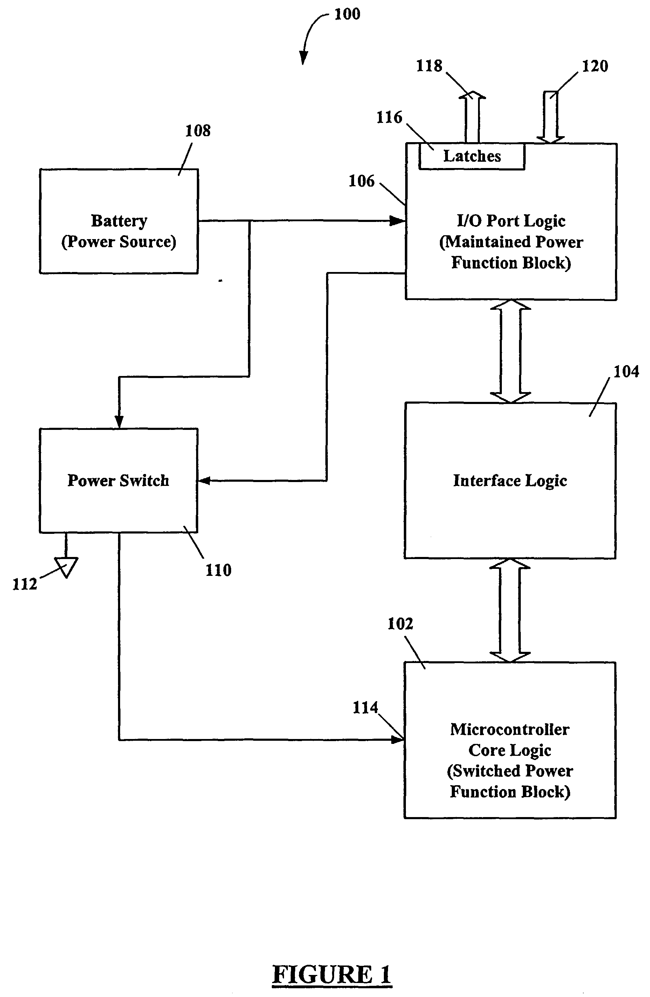

Referring now to Figure 1, a schematic block diagram of an electronic system, according to an embodiment of the invention, is illustrated. An electronic system, such as an integrated circuit microcontroller, is generally indicated by the numeral 100. The integrated circuit microcontroller comprises microcontroller core logic 102, input-output (I/O) port logic 106, interface logic 104, a battery (power source) 108 and a power switch 110. The I/O port logic 106 and power switch 110 are connected directly to the battery 108. The microcontroller core logic 102 is connected to the battery 108 through the power switch 110, and the interface logic may derive its power from either or both of the microcontroller core logic 102 or I/O port logic 106. The power switch 110 may be, for example but not limitation, a metal oxide semiconductor field effect transistor (MOSFET) and the like.

In addition, the power switch 110 may be connected to a ground or common node 112. The power switch 110 disconnects the microcontroller core logic 102 from the battery 108, and connects the power node 114 of the microcontroller core logic 102 to the ground or common node 112. The outputs from microcontroller core logic 102 will then be at substantially the same voltage potential as the ground or common node 112.

Suitable gating or isolation circuits may also be provided in the interface logic 104 for inhibiting or disconnecting, respectively, clock and/or signal circuits between the microcontroller logic 102 and the I/O port logic 106. An inhibit signal may be used to set the gating or isolation circuits (not illustrated) just before power is removed from the microcontroller core logic 102. An enable signal may be used to reset the gating or isolation circuits after power has been applied (re-applied) to the microcontroller core logic 102 and the microcontroller core logic 102 is in condition to properly communicate with the interface logic 104 and I/O port logic 106.

Logic levels of the I/O port logic 106 outputs 118 may be stored in registers or latches 116. Thus, the most recent logic state of the outputs 118 of the I/O port logic 106 are maintained when power is removed from the microcontroller core logic 102. The external inputs 120 of the I/O port logic 106 may receive information for processing by the microcontroller core logic 102, and may also be configured to detect a change in an input signal. The input signal change may be used to initiate the power switch 110 to re-apply power to the microcontroller core logic 102.

It is contemplated and with the scope of the present invention that all circuits and functions disclosed in Figure 1, except for the battery, may be contained in one or more integrated circuits. The preferred embodiments of the present invention are described for illustrative purposes comprising a single integrated circuit, but one of skill in the art of electronics will readily appreciate that the embodiments of the invention may be equally applied to a combination of circuits fabricated in different integrated circuit packages and connected together using a common wiring substrate such as, for example but not limitation, a printed wiring or circuit board.

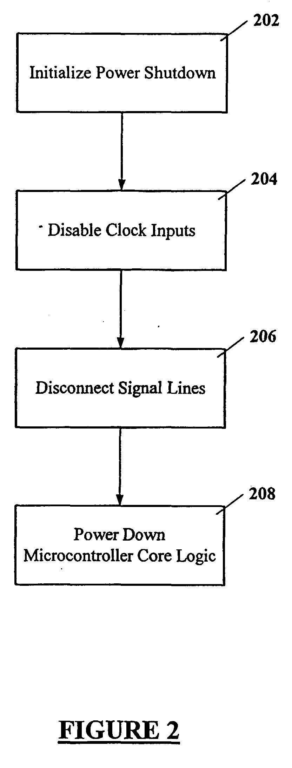

Referring now to Figure 2, a schematic logic flow diagram of a power down sequence according to an embodiment of the invention is illustrated. In step 202 the power shutdown sequence is initialized by, for example, the microcontroller core logic 102. In step 204 the microcontroller core logic 102 causes the interface logic 104 and/or the I/O port logic 106 clock inputs to be disabled. In step 206 the microcontroller core logic 102 may cause the interface logic 104 and/or the I/O port logic 106 signal lines to be disconnected from the outputs of the microcontroller core logic 102. In step 208 the I/O port logic 106 causes the power switch 110 to disconnect the battery 108 from the microcontroller core logic 102.

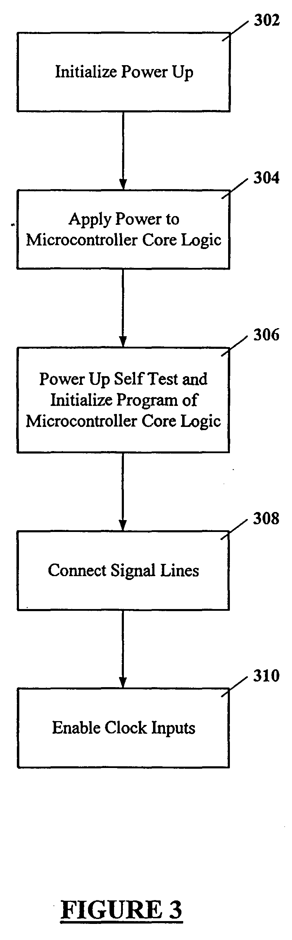

Referring now to Figure 3, a schematic logic flow diagram of a power up sequence according to the embodiment of the invention is illustrated. In step 302 the power up sequence is initialized by, for example, the I/O port logic 106. In step 304, power is applied to the microcontroller core logic 102, which causes, in step 306 the microcontroller core logic 102 to begin a power up self test program and to initialize its operating program. In step 308 the signal lines between the interface logic 104 and/or the I/O port logic 106 are connected to outputs of the microcontroller core logic 102. In step 310 the clock inputs to the interface logic 104 and/or the I/O port logic are enabled.

The invention, therefore, is well adapted to carry out the objects and attain the ends and advantages mentioned, as well as others inherent therein. While the invention has been depicted, described, and is defined by reference to particular preferred embodiments of the invention, such references do not imply a limitation on the invention, and no such limitation is to be inferred. The invention is capable of considerable modification, alteration, and equivalents in form and function, as will occur to those ordinarily skilled in the pertinent arts. The depicted and described preferred embodiments of the invention are exemplary only, and are not exhaustive of the scope of the invention. Consequently, the invention is intended to be limited only by the spirit and scope of the appended claims, giving full cognizance to equivalents in all respects.

## Claims

1. A microcontroller integrated circuit having low power standby capabilities while maintaining input-output port integrity, comprising:
microcontroller core logic;
input-output port logic, said input-output port logic adapted to store output logic levels;
interface logic connected between said microcontroller core logic and said input-output port logic; and
a power switch connected to said microcontroller core logic and adapted for connection to a power source, said power switch being controlled by said input-output port logic; wherein,
said microcontroller core logic controls the output logic levels of said input-output port logic when the power source is connected to said microcontroller core logic, and when the power source is disconnected from said microcontroller core logic then the output logic levels of said input-output port logic remain in the same state as they were just before the power source was disconnected from said microcontroller core logic.

2. The microcontroller integrated circuit of claim 1, wherein the power source is a battery.

3. The microcontroller integrated circuit of claim 1, wherein said interface logic comprises signal isolation switches and clock input disable circuits, wherein logic signals and clock signals from said microcontroller core logic to said input-output port logic are disconnected and disabled, respectively, before the power source is disconnected from said microcontroller core logic.

4. The microcontroller integrated circuit of claim 1, wherein the output logic levels of said input-output port are stored in a memory having a clock input and data inputs, wherein data is stored in said memory when a logic level transition occurs at the clock input.

5. The microcontroller integrated circuit of claim 4, wherein a clock disable signal is sent by said microcontroller core logic to said interface logic so that the clock input is disabled.

6. The microcontroller integrated circuit of claim 5, wherein said input-output logic port causes said power switch to disconnect the power source from said microcontroller core logic after the clock input is disabled.

7. The microcontroller integrated circuit of claim 5, wherein the data inputs are disconnected when the clock disable signal is sent.

8. The microcontroller integrated circuit of claim 7, wherein said input-output logic port causes said power switch to disconnect the power source from said microcontroller core logic after the clock input is disabled and the data inputs are disconnected.

9. The microcontroller integrated circuit of claim 1, further comprising said power switch adapted for connecting said microcontroller core logic to a first voltage of the power source in a first mode and to a second voltage of the power source in a second mode.

10. The microcontroller integrated circuit of claim 9, wherein the first voltage is an operating voltage and the second voltage is at a common or ground level of the power source.

11. The microcontroller integrated circuit of claim 9, wherein said microcontroller core logic is operational when said power switch is in the first mode and is shutdown and drawing substantially no power from the power source when said power switch is in the second mode.

12. The microcontroller integrated circuit of claim 4, wherein said microcontroller core logic performs a diagnostic self test when connected to the power source.

13. The microcontroller integrated circuit of claim 1, wherein an external input signal to said input-output port logic causes said power switch to connect the power source to said microcontroller core logic.

14. The microcontroller integrated circuit of claim 12, wherein a clock enable signal is sent by the microcontroller core logic so that the clock input is enabled.

15. A method, in a microcontroller integrated circuit having low power standby capabilities while maintaining input-output port integrity, comprising the steps of:
providing microcontroller core logic;
providing input-output port logic, said input-output port logic adapted to store output logic levels;
providing interface logic connected between said microcontroller core logic and said input-output port logic; and
providing a power switch connected to said microcontroller core logic and adapted for connection to a power source, said power switch being controlled by said input-output port logic; whereby the steps of,
controlling the output logic levels of said input-output port logic with said microcontroller core logic when the power source is connected to said microcontroller core logic, and
disconnecting the power source from said microcontroller core logic while maintaining the output logic levels of said input-output port logic in the same state as they were just before the power source was disconnected from said microcontroller core logic.

16. The method of claim 15, wherein the step of disconnecting the power source from said microcontroller core logic comprises the steps of:
initiating a power shutdown in said microcontroller core logic;
disabling clock inputs to memory registers in said input-output port logic; and
powering down said microcontroller core logic by disconnecting the power source therefrom.

17. The method of claim 16, alter the step of disabling the clock inputs further comprises the step of disconnecting signal lines between said microcontroller core logic and said input-output port logic.
